Europäisches Patentamt

European Patent Office

Office européen des brevets

(19)

(11) Numéro de publication : **0 125 215**
**B1**

(12) **FASCICULE DE BREVET EUROPÉEN**

(45) Date de publication du fascicule du brevet :
07.09.88

(51) Int. Cl.⁴ : **A 47 J 31/40**

(21) Numéro de dépôt : **84830139.6**

(22) Date de dépôt : **04.05.84**

(54) **Groupe de débit de distributeur manuel de boissons chaudes à cartouches préconfectionnées à jeter de double format.**

(30) Priorité : 05.05.83 IT 941683

(43) Date de publication de la demande :
14.11.84 Bulletin 84/46

(45) Mention de la délivrance du brevet :
07.09.88 Bulletin 88/36

(84) Etats contractants désignés :
AT BE CH DE FR GB LI LU NL SE

(56) Documents cités :
EP-A- 0 087 550
FR-A- 2 447 173
US-A- 2 615 384
US-A- 2 778 739
US-A- 3 295 998

(73) Titulaire : **TUTTOESPRESSO S.R.L.**
**Via Lorenzetti 29**
**I-50019 Sesto Fiorentino Firenze (IT)**

(72) Inventeur : **Baecchi, Alfredo**
**Via F. Confalonieri, 10**
**I-50133 Firenze (IT)**
Inventeur : **Bozzolini, Aldo**
**Via Lazzerini, 29**
**I-50019 Sesto Fiorentino (Firenze) (IT)**
Inventeur : **Mori, Carlo**
**Via Donizzetti, 74**
**I-50018 Scandicci (Firenze) (IT)**
Inventeur : **Santoni, Tancredo**
**Via A. Grandi, 30**
**I-50013 Campi Bisenzio (Firenze) (IT)**

(74) Mandataire : **Martini, Lazzaro**
**Ufficio Brevetti Ing. Lazzaro Martini Via Brunelleschi, 1**
**I-50123 Firenze (IT)**

## Description

L'invention concerne un groupe de distribution pour machine manuelle distributrice de boissons chaudes avec des capsules à jeter en double format.

On connaît les machines distributrices de boissons chaudes avec des capsules préconfectionnées à jeter dans lesquelles le groupe de distribution ne peut utiliser que des capsules d'un seul format, de sorte que, s'il est prévue pour fournir du café expresso, c'est-à-dire une boisson de percolation à partir de capsules de petit format, il n'est pas en mesure de fournir un chocolat chaud, un cappuccino ou d'autres boissons similaires de type soluble ou en suspension à partir de capsules de grand format ; ceci implique de devoir installer au moins deux groupes de distribution dans chaque machine distributrice.

On connaît également les machines distributrices de boissons chaudes avec un groupe de distribution adapté aussi bien pour les boissons de percolation que de type soluble, mais dans ce cas, les capsules utilisées, qui doivent quand même toujours être d'égales dimensions, sont de grand format même pour le café expresso et ceci comporte un coût majeur dans la fabrication des capsules.

Au surplus, en considération du fait que l'eau à introduire dans les capsules doit être à une température d'environ 95 °C pour le café expresso et au contraire d'environ 70 °C pour les autres boissons, les machines distributrices de boissons chaudes aujourd'hui connues sont pourvues d'une installation d'eau chaude et d'eau froide ou de deux chaudières pour obtenir l'eau à deux températures différentes ou encore d'une seule chaudière avec au moins une soupape électrique sur la conduite d'eau froide et quelques circuits de commande qui doivent être actionnés par l'utilisateur chaque fois qu'est requise la distribution de boissons autres que le café expresso.

On connaît en particulier du document US-A-3 295 998, une machine distributrice de boissons chaudes avec des capsules préconfectionnées à jeter de format unique, comprenant une source d'eau à basse température reliée à un réservoir principal d'eau à température moyenne, lui-même relié à un petit réservoir de chauffage relié à la station de distribution de boissons chaudes et des circuits électriques, pneumatiques et hydrauliques pour appliquer une pression au réservoir de chauffage, alors isolé du réservoir principal et présélectionné à une température donnée, de manière à le vider à travers une capsule préalablement disposée dans la station de distribution et avec ses parois supérieures et inférieures percées et pour interdire l'application de cette pression lorsque le réservoir de chauffage est en communication avec le réservoir principal et isolé par rapport à la station de distribution. Une telle machine, conçue dans le but de remédier aux problèmes liés au maintien permanent à haute température d'une grande quantité d'eau, n'est pas adaptée à la distribution de boissons de percolation en raison de la limitation à un format unique, donc grand, de capsules à jeter et impliqué par ailleurs des circuits électriques, pneumatiques et hydrauliques qui, s'ajoutant au problème du perçage des capsules, entraînent un coût de fabrication et une complexité technique trop élevés pour une machine manuelle distributrice de boissons chaudes.

L'objectif principal de la présente invention consiste à éliminer tous ces inconvénients en proposant un groupe de distribution automatique pour machine distributrice de boissons chaudes avec des capsules préconfectionnées à jeter aussi bien de petit que de grand format, c'est-à-dire aussi bien pour du café expresso de percolation que pour des boissons de type soluble ou en suspension.

On est parvenu à ce résultat en conformité avec la présente invention réalisant un groupe de distribution pour machine manuelle distributrice de boissons chaudes avec des capsules préconfectionnées à jeter en plastique, comprenant un cylindre de chemisage de la capsule en phase d'utilisation, asservi à une came tubulaire avec manette d'actionnement, une tête plane disposée au-dessus dudit cylindre pour la distribution séparée d'eau à basse et à haute température et des moyens de sortie de la boisson chaude prévus au centre du fond dudit cylindre, caractérisé en ce que ledit cylindre est pourvu à l'intérieur et contre son fond d'un contre-cylindre de hauteur inférieure à celle dudit cylindre, de manière à délimiter une première chambre cylindrique au-dessus de la bouche dudit contre-cylindre pour la réception d'une capsule cylindrique de petit format pour boisson de percolation en appui sur ladite bouche en phase d'utilisation et une deuxième chambre cylindrique à l'intérieur dudit contre-cylindre, communiquant avec ladite première chambre pour former une chambre bicylindrique pour la réception d'une capsule bicylindrique de grand format pour boisson de solution ou en suspension, en appui sur le bord périphérique du fond à entonnoir du contre-cylindre ; en ce que ladite tête est pourvue de plusiueurs ouvertures centrales pour la distribution d'eau à haute température et d'une ouverture périphérique pour la distribution d'eau à basse température, séparée desdites ouvertures centrales et en ce que le couvercle desdites capsules est pourvu d'au moins deux éléments annulaires en relief pour coopérer par compression avec ladite tête de distribution, disposés de manière à délimiter entre eux une chambre annulaire en communication exclusivement avec ladite ouverture périphérique pour la distribution d'eau à basse température et de manière telle que la partie périphérique des éléments annulaires des capsules de petit et de grand format réalise une étanchéité totale avec la tête de distribution et que la partie centrale des éléments annulaires des capsules de petit format réalise également une étanchéité totale avec ladite tête de sorte que seule l'eau à haute température passe à travers la capsule de petit format et la partie centrale des éléments annulaires des capsules de grand format réalise une étanchéité partielle avec ladite tête pour l'eau à basse température de sorte que l'eau à haute température et l'eau à basse température passe à travers la capsule de grand format.

Les avantages obtenus grâce à la présente invention consistent essentiellement en ce que, avec un seul et même groupe de distribution, on peut utiliser indifféremment des capsules préconfectionnées de petit et de grand format ; que l'installation pour l'eau chaude et l'eau froide est considérablement simplifiée par rapport à celle qui est actuellement utilisée dans les machines distributrices de boissons chaudes ; que la distribution de l'eau à la température adéquate par rapport au type de boisson souhaitée est automatique et ne nécessite aucune intervention de l'utilisateur ; que les capsules adoptées sont de fabrication aisée et n'ont pas un coût tellement supérieur à celui des capsules actuellement connues ; que les capsules adoptées constituent une garantie du produit qui y est contenu et partant favorisent la défense du consommateur.

L'invention sera décrite plus en détail ci-dessous à l'aide de dessins montrant seulement une forme possible de réalisation.

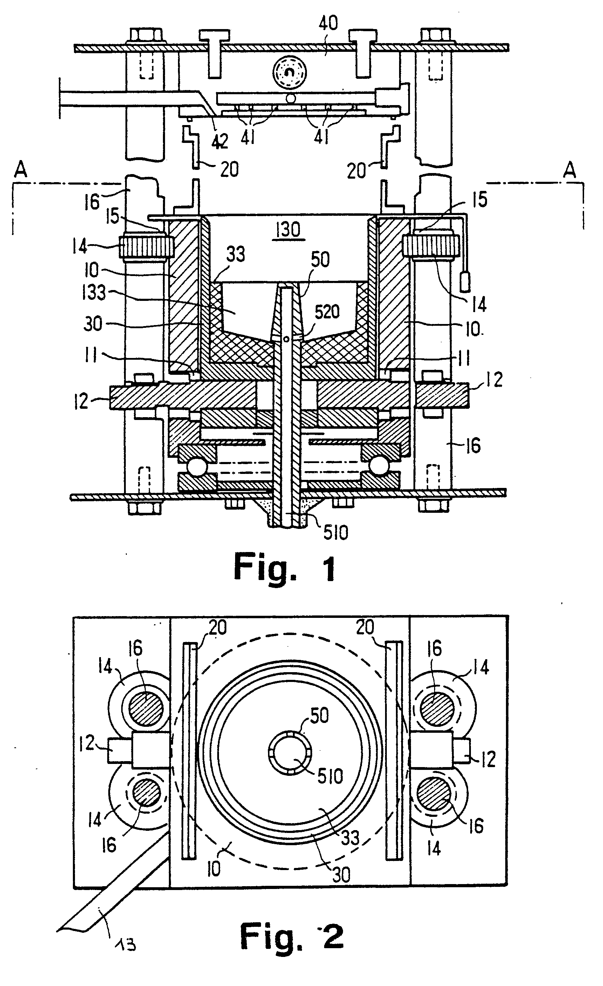

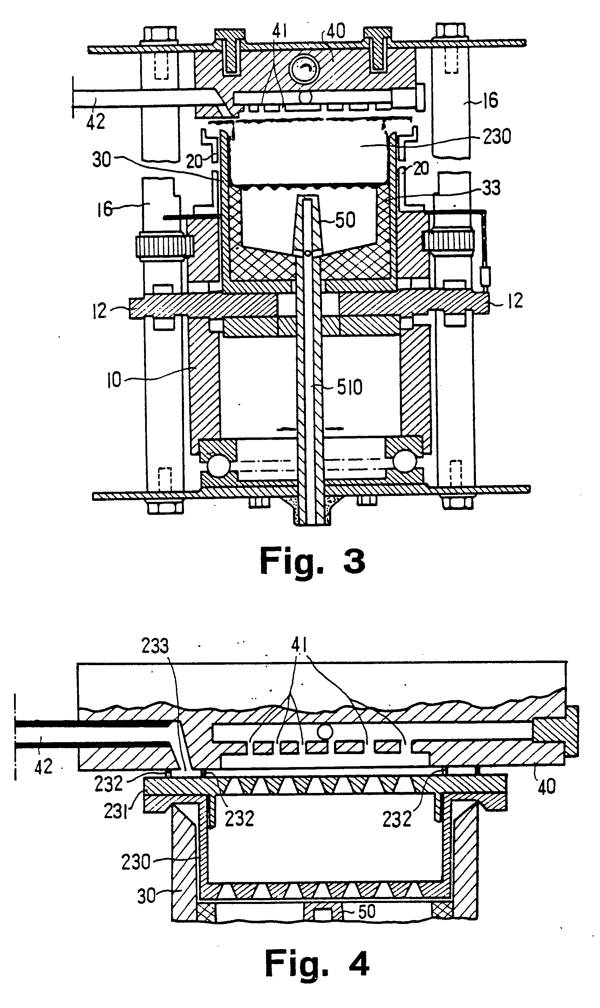

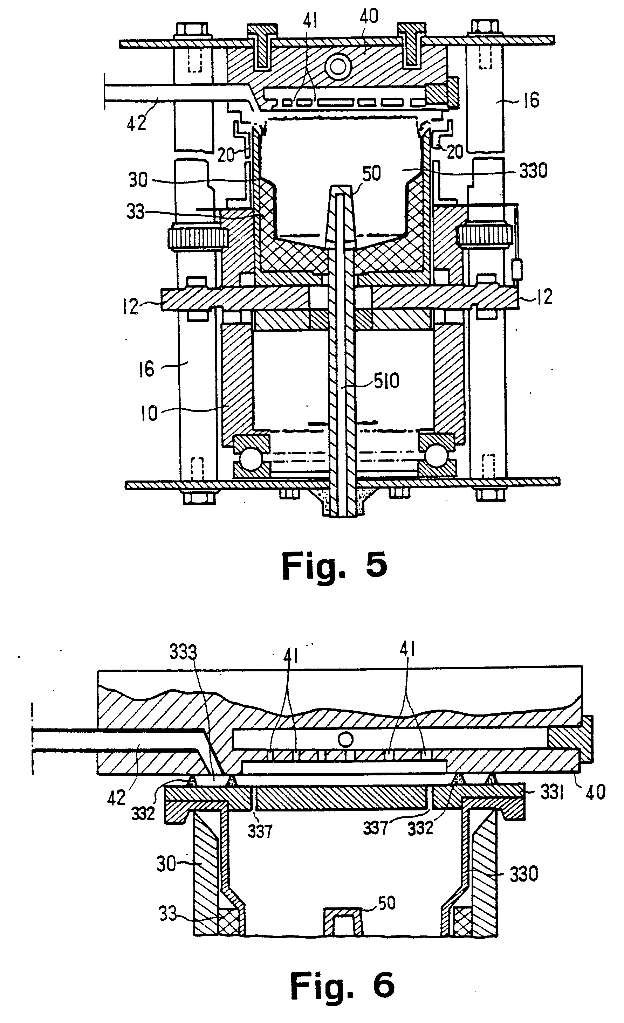

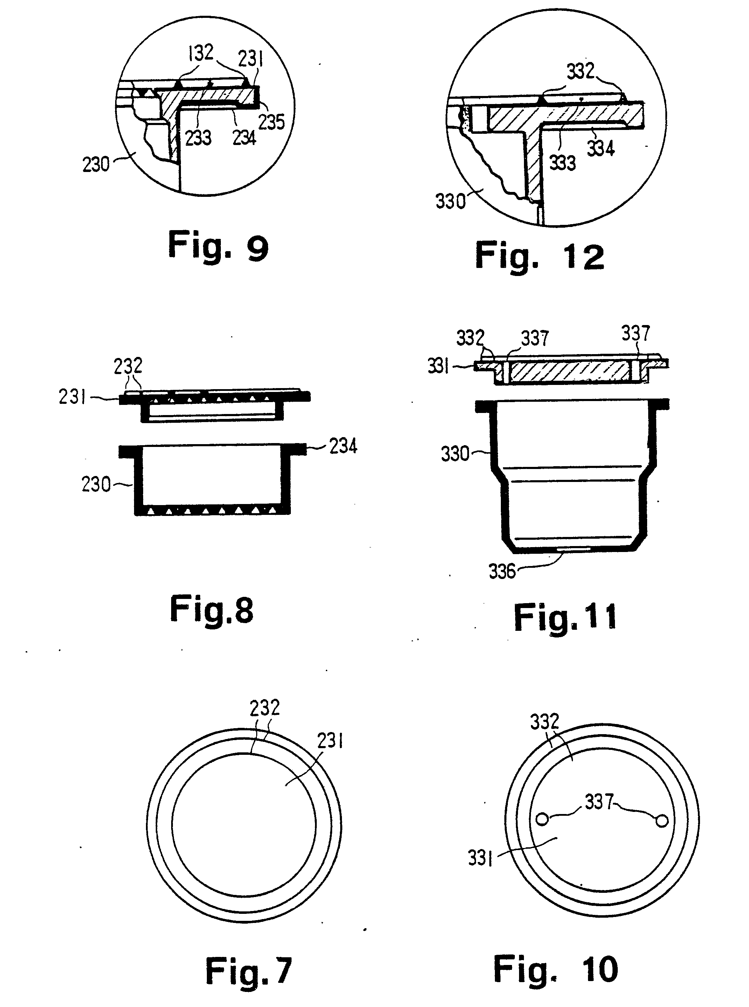

Dans la Planche 1, la Fig. 1 représente la section verticale axiale d'un groupe de distribution selon l'invention, en état de repos, la Fig. 2 représente la section suivant AA de la Fig. 1 ; dans la Planche 2, la Fig. 3 représente la section verticale axiale du groupe de la Fig. 1 contenant une capsule de petit format, la Fig. 4 représente la section verticale axiale agrandie de la zone de contact entre la capsule et la tête de distribution de l'eau dans le groupe de la Fig. 3 ; dans la Planche 3, la Fig. 5 représente la section verticale. axiale du groupe de la Fig. 1 contenant une capsule de grand format, la Fig. 6 représente la section verticale axiale agrandie de la zone de contact entre la capsule et la tête de distribution d'eau dans le groupe de la Fig. 5 ; dans la Planche 4, la Fig. 7 représente la vue en plan d'une capsule de petit format à utiliser dans un groupe de distribution selon l'invention, la Fig. 8 représente la section verticale axiale de la capsule de la Fig. 7, la Fig. 9 représente, en section verticale, un détail agrandi du couvercle de la capsule de la Fig. 7, la Fig. 10 représente la vue en plan d'une capsule de grand format pour un groupe de distribution selon l'invention, la Fig. 11 représente la section verticale axiale de la capsule de la Fig. 10, la Fig. 12 représente, en section verticale, un détail agrandi du couvercle de la capsule de la Fig. 10.

Réduit à sa structure essentielle et en se référant aux figures 1 à 6 des dessins ci-joints, un groupe de distribution pour machine manuelle distributrice de boissons chaudes avec des capsules préconfectionnées à jeter en double format selon l'invention comprend :

— une came tubulaire (10) avec deux fentes (11) diamétralement opposées pour le passage de deux étriers (12) horizontaux et avec un levier (13) pour la commande de la rotation horizontale, dans un sens ou dans l'autre de la came (10), laquelle est retenue en place par les coussinets (14) d'un bâti (16) en prise dans une gorge horizontale (15) de la came (10), tandis que les étriers (12), guidés entre les montants (16), respectivement, se soulèvent ou s'abaissent ; au-dessus de ladite came (10) se trouvent deux guides (20) horizontaux, parallèles, fixes, pour retenir, suspendue, la capsule qui y a été introduite manuellement ;

— un cylindre (30) creux, ouvert dans sa partie supérieure, de chemisage de la capsule durant l'utilisation, avec, à l'intérieur, un contre-cylindre (33) creux, ouvert dans sa partie supérieure et de hauteur inférieure à celle du cylindre (30) précité, dont émerge du centre de son fond à entonnoir, solidaire, un élément (50) tronconique, avec la tête plane et située dans le même plan que la bouche dudit contre-cylindre (33) pour réaliser un appui pour une capsule de petit format et dont la tige, qui est prolongée vers le bas, est pourvue d'un trou (510) axial et de plusieurs trous (520) transversaux et communiquant avec le trou axial (510) ; la surface latérale dudit cylindre (30) laissée découverte par le contre-cylindre (33) définit une chambre cylindrique (130) propre à insérer une capsule (230) cylindrique, de petit format, c'est-à-dire de format adapté au café expresso, tandis que la surface latérale et le fond du contre-cylindre (33) définissent une chambre (133) cylindrique qui, avec la chambre (130) précitée du cylindre (30) forme une chambre bicylindrique propre à insérer une capsule bicylindrique (233) de grand format, c'est-à-dire de celles préconfectionnées avec de la poudre de substances lyophilisées ou solubles dans l'eau et partant adaptées pour des boissons de solution ou en suspension ;

— une tête plane (40) pour la distribution de l'eau, avec plusieurs ouvertures (41) pour l'eau à haute température et une ouverture (42) séparée des ouvertures (41) pour l'eau à basse température : l'eau à haute et à basse température étant alimentée à la même pression par une pompe commune.

En se référant aux figures 7 à 9 des dessins ci-joints, une capsule (230) pour boissons de percolation a son couvercle (231) pourvu de deux éléments annulaires (232) en pointe, en relief, concentriques, en position et avec des dimensions telles qu'elles définissent une chambre annulaire (233) communiquant avec l'ouverture (42) de la tête (40) et dont l'étanchéité est obtenue avec la compression de la capsule contre la tête (40) en combinaison avec la résistance offerte par le lit de café moulu contenu dans la capsule elle-même ; en outre, le flasque (234) du corps de la capsule est avantageusement pourvu d'un col inférieur (235) apte à ancrer la capsule au cylindre de chemisage (30) et ainsi à empêcher la rentrée de la capsule dans ce cylindre (30) alors que l'eau sous pression sortant de la tête (40) renverse la capsule.

En se référant aux figures 10 à 12 des dessins ci-joints, une capsule (330) pour boissons solubles est composée d'un corps à deux sections cylindriques reliées par un col tronconique, d'un fond avec une zone centrale (336) amincie et pré-incisée pour faciliter le passage de l'élément (50) du contre-cylindre (33), et d'un couvercle (331) avec deux trous débouchant (337), diamétralement opposés et avec deux éléments annulaires (332) en pointe, en relief, concentriques, en position telle qu'ils définissent une chambre annulaire (333) communiquant avec l'ouverture (42) de la tête (40) ; l'élément (332) plus proche du centre du couvercle étant disposé pour s'infléchir dans la direction centripète par suite du léger abaissement du corps de la capsule en phase d'utilisation et de son désemplissage rapide. Le flasque (334) du corps de la capsule (330) est pourvu d'un col inférieur (335) analogue à celui (235) de la capsule (230).

Le fonctionnement est le suivant. Une fois introduite une capsule (230-330) jusqu'au centre des guides (20), on tourne à fond le levier (13) heurtant ainsi la surface latérale supérieure de la capsule avec le cylindre de chemisage (30), soulevant ensuite la capsule jusqu'à ce qu'elle touche la tête (40) de distribution de l'eau et enfin comprimant le flasque de la capsule obtenant ainsi son étanchéité ; si la capsule est de petit format (230), c'est-à-dire pour café expresso, la chambre (232) est fermée de sorte que seulement l'eau à haute température, sortant des ouvertures (41) de la tête (40) passe à travers la capsule et du conduit (510) jaillit le café expresso. Sinon, si la capsule introduite est de grand format (330), c'est-à-dire pour boissons solubles, une fois que la capsule a été soulevée et pressée par le cylindre de chemisage (30) contre la tête (40), l'élément annulaire (332) plus proche du centre du couvercle (331) s'infléchit en direction centripète de sorte que l'ouverture (333) est ouverte et l'eau à haute température sortant des ouvertures (41) se mélange avec celle à basse température sortant de l'ouverture (42) et ainsi mélangée, passe à travers la capsule et du conduit (510) jaillit la boisson de type soluble.

## Revendications

1. Groupe de distribution pour machine manuelle distributrice de boissons chaudes avec des capsules préconfectionnées à jeter en plastique, comprenant un cylindre (30) de chemisage de la capsule (230-330) en phase d'utilisation, asservi à une came tubulaire (10) avec manette d'actionnement (13), une tête plane (40) disposée au-dessus dudit cylindre pour la distribution séparée d'eau à basse et à haute température et des moyens (50) de sortie de la boisson chaude prévus au centre du fond dudit cylindre, caractérisé

en ce que ledit cylindre (30) est pourvu à l'intérieur et contre son fond d'un contre-cylindre (33) de hauteur inférieure à celle dudit cylindre, de manière à délimiter une première chambre cylindrique (130) au-dessus de la bouche dudit contre-cylindre (33) pour la réception d'une capsule cylindrique de petit format (230) pour boisson de percolation en appui sur ladite bouche en phase d'utilisation, et une deuxième chambre cylindrique (133) à l'intérieur dudit contre-cylindre communiquant avec ladite première chambre pour former une chambre bicylindrique pour la réception d'une capsule bicylindrique de grand format (330) pour boisson de solution ou en suspension, en appui sur le bord périphérique du fond à entonnoir du contre-cylindre,

en ce que ladite tête (40) est pourvue de plusieurs ouvertures centrales (41) pour la distribution d'eau à haute température et d'une ouverture périphérique (42) pour la distribution d'eau à basse température, séparée desdites ouvertures centrales (41),

et en ce que le couvercle (231-331) desdites capsules est pourvu d'au moins deux éléments annulaires (232-332) en relief pour coopérer par compression avec ladite tête de distribution (40), disposés de manière à délimiter entre eux une chambre annulaire (233-333) en communication exclusivement avec ladite ouverture (42) pour la distribution d'eau à basse température et de manière telle que la partie périphérique des éléments annulaires des capsules de petit et de grand format (232-332) réalise une étanchéité totale avec la tête de distribution et que, la partie centrale des éléments annulaires (232) des capsules de petit format (230) réalise également une étanchéité totale avec ladite tête de sorte que seule l'eau à haute température passe à travers la capsule de petit format et la partie centrale des éléments annulaires (332) des capsules de grand format (330) réalise une étanchéité partielle avec ladite tête, pour l'eau à basse température de sorte que l'eau à haute température et l'eau à basse température passe à travers la capsule de grand format.

2. Groupe de distribution selon la revendication 1 caractérisé en ce que lesdits moyens de sortie de la boisson chaude sont constitués par un élément tronconique (50) émergeant du centre du fond à entonnoir dudit contre-cylindre (33) solidaire du cylindre de chemisage et comportant une tête plane, située dans le même plan que la bouche dudit contre-cylindre (33) et une tige qui est prolongée vers le bas, ladite tige comportant un trou (510) axial et plusieurs trous (520) transversaux à la base dudit élément tronconique et communicant avec le trou axial (510).

3. Groupe de distribution selon la revendication 1 caractérisé en ce qu'au-dessus de ladite came tubulaire (10) se trouvent deux guides (20) horizontaux, parallèles, fixes, à entrée et sortie libres et destinés à retenir suspendue une capsule qui y a été insérée manuellement.

4. Groupe de distribution selon la revendication 1 caractérisé en ce que ladite tête (40) pour la distribution de l'eau a les ouvertures (41) pour l'eau à haute température et l'ouverture (42) pour l'eau à basse température reliées à une pompe commune.

5. Groupe de distribution selon la revendication 1 caractérisé en ce que lesdits éléments annulaires (232-332) du couvercle de la capsule (230-330) s'étendent transversalement au point de se toucher en formant un élément unique d'interception de l'ouverture périphérique (42) de la tête (40).

6. Groupe de distribution selon la revendication 2 caractérisé en ce que la capsule (330) à utiliser pour les boissons solubles a son corps en deux sections cylindriques de diamètre décroissant vers le fond et reliées entre elles et avec une zone centrale (336) du fond amincie et pré-incisée pour le passage dudit élément tronconique (50).

7. Groupe de distribution selon la revendication 1 caractérisé en ce que le corps des capsules (230-330) est muni d'un flasque (234-334) pourvu d'un col inférieur (235-335) d'ancrage de la capsule sur la bouche dudit cylindre de chemisage.

## Claims

1. Supply unit for manually operated hot drink dispenser machine using throw-away prepacked plastic cartridges, comprising an housing cylinder (30) for sheating the cartridge (230, 330) in the phase of utilization, controlled by a tubular cam (10) with an operating handle (13), a plane head (40) arranged above said cylinder for separately supplying water at low and at high temperature, and hot drink outlet means (50) provided at the center of the bottom of said cylinder, characterized in that said cylinder (30) is provided internally and against its bottom with a counter-cylinder (33) having an height inferior to the height of said cylinder, so as to delimit a first cylindrical chamber (130) above the top opening of said counter-cylinder (33) for housing a cylindrical small sized cartridge (230) for percolation drink, leaning on said opening in the phase of utilization, and a second cylindrical chamber (133) inside said counter-cylinder and communicating with said first chamber to form a bicylindrical chamber for housing a bicylindrical large sized cartridge (330) for solution or suspension drink, leaning on the peripherical edge of the funnel-shaped bottom of the counter-cylinder ; in that said head (40) is provided with a plurality of central openings (41) for supplying water at high temperature and a peripherical opening (42) for supplying water at low temperature, separated from said central openings ; and in that the cover (231-331) of said cartridges is provided with at least two annular elements (232-332) embossed to cooperate by compression with said supply head (40) and arranged so as to delimit between them an annular chamber (233-333) communicating esclusively with said opening (42) so that the peripherical part of the annular elements (232-332) of the small and large sized cartridges effects a total tightness with the supply head and that the central part of the annular elements (232) of the small sized cartridges (230) also effects a total tightness with said head, so that the only water at high temperature passes through the small size cartridge, and the central part of the annular elements (332) of the large sized cartridges (330) effects a partial tightness with said head for the water at low temperature, so that the water at high temperature and the water at low temperature pass through the large sized cartridge.

2. Supply unit according to claim 1, characterized in that said hot drink outlet means are constituted by a truncated element (5) projecting from the center of the funnel-shaped bottom of said counter-cylinder (33) integral with the housing cylinder and having a plane head, located in the same plane as the top opening of said counter-cylinder (33), and a rod which extends downwards, said rod being provided with an axial hole (510) and a plurality of transversal hole (520) at the bottom of said truncated element and communicating with the axial hole (510).

3. Supply unit according to claim 1, characterized in that, above said tubular cam (10), are arranged two horizontal, parallel, fixed guides (20) with free entry and exit and adapted to bear up a pendant cartridge which has been manually installed hereon.

4. Supply unit according to claim 1, characterized in that said head (40) for supplying water has its openings (41) for the water at high temperature and the opening (42) for the water at low temperature which are connected to a common pump.

5. Supply unit according to claim 1, characterized in that said annular elements (232-332) of the cover of cartridge (230-330) extend transversally so much to be contiguous and form a single element for shutting off the peripherical opening (42) of the head (40).

6. Supply unit according to claim 1, characterized in that the cartridge (330) to be used for the soluble drinks has its body in two cylindrical sections with diameters which decrease downwards and connected together and with a central zone (336) of the bottom which is maked thinner and pre-incised for the passage of said truncated element (50).

7. Supply unit according to claim 1, characterized in that the body of the cartridges (230-330) is provided with a flange (234-334) provided with a lowe mouth (235-335) for the anchorage of the cartridge on the top opening of said housing cylinder.

## Patentansprüche

1. Austeilungsaggregat für eine handbetätigte Geträndezubereitungsmaschine mit vorgefertigten Einwegkapseln aus Plastik, bestehend aus einem Zylinder (30) zur Umhüllung der Kapsel (230-330) in der Zubereitungsphase, betätigt durch eine zylindrische Steuerkurve (10) mit Betätigungsgriff (13), einen flachen Kopfteil (40) oberhalb von dem genannten Zylinder für die getrennte Zufuhr von Tief- und Hochtemperaturwasser, und Mittel (50) zum Abfluss des heissen Getränk die in der Mitte des Bodens des genannten Zylinders vorgesehen sind, dadurchgezeichnet dass der genannte Zylinder (30) mit einem Gegenzylinder (33) versehen ist, der im Innern und auf dem Boden des ersten liegt und der eine geringere Höhe hat, so dass eine erste sich über der Obermündung des genannten Gegenzylinder (33) befindenden Zylinderkammer (130) begrenzen wird, für die Aufnahme einer kleinen zylindrischen Einwegkapsel (230) für Filtergetränke, die in der Zubereitungsphase auf der genannten Obermündung lehnt, und dass eine zweite sich im Innern des genannten Gegenzylinder befindenden Zylinderkammer (330) begrenzen wird, die in Verbindung mit der genannten ersten Kammer steht, um eine Doppel-Zylinderkammer zu bilden für die Aufnahme einer grossen doppelzylindrischen Kapsel (330) für lösliche und ungelöste Getränke, die auf dem äusseren Rand des trichterförmigen Bodens des Gegenzylinder ; der genannten Kopfteil (40) mit mehreren zentralen Öffnungen (41) für die Zufuhr von Hochtemperaturwasser und mit einer von den genannten zentralen Öffnungen (41) abgetrennten Umfangsöffnung (42) für die Zufuhr von Tieftemperaturwasser versehen ist und der Deckel (231-331) der genannten Kapseln mit nicht weniger als zwei erhabenen ringförmigen Elementen (232-332) versehen ist, um bei Druck mit dem genannten Kopfteil (40) zusammenwirken, die so angeordnet sind, dass sie zwischen sich eine ringförmige Kammer abgrenzen, die ausschliesslich mit der genannten Öffnung (42) für die Zufuhr von Tieftemperaturwasser in Verbindung steht, und zwar so, dass der Umfangsteil der ringförmigen Elementen (232-332) der keinen und grössen Kapseln eine absolute Abdichtung mit dem genannten Zufuhrkopfteil gewährleistet, und dass der zentrale Teil der ringförmigen Elementen (232) der Kapsel von kleiner Grösse (230) ebenfalls eine absolute Abdichtung mit dem genannten Kopfteil gewährleistet, und zwar so, dass nur das Hochtemperaturwasser durch die Kapsel von keiner Grösse fliesst, und dass der zentrale Teil der rinförmigen Elementen (332) der grossen Kapsel (330) nur eine partielle Abdichtung mit dem genannten Kopfteil für das Tieftemperaturwasser herstellt, so dass das Hoch- und Tieftemperaturwasser durch die grosser Kapsel fliesst.

2. Austeilungsaggregat nach Anspruch 1, dadurchgezeichnet dass die Mittel zum Abfluss des heissen Getränk aus einem kegelstrumpfartigen Element (50) besteht, das aus der Mitte des trichterförmigen Bodens des mit dem Umhüllungszylinder einteiligen genannten Gegenzylinder (33) hervorsteht und das einen flache Kopfteil, der in der selben Ebene wie der Obermündung des Gegenzylinder (33) liegt, und eine nach unter verlängerten Stange enthält, die mit einem axialen Loch (510) und mehreren Querlöcher (520), die sich an den Stützpunkt des genannten kegelstumpfartigen Elementes befinden und in Verbindung mit dem axialen Loch (510) stehen, versehen ist.

3. Austeilungsaggregat nach Anspruch 1, dadurchgezeichnet dass oberhalb der genannten zylindrischen Steuerkurve (10), zwei horizontalen parallelen feststehenden Führungen (20) mit freien Eingang und Ausgang versehen sind, die um eine von Hand darin eingeführten Kapsel aufgehängt zu halten geeignet sind.

4. Austeilungsaggregat nach Anspruch 1, dadurchgezeichnet dass die Öffnungen (41) für das Hochtemperaturwasser und die Öffnung (42) für das Tieftemperaturwasser der genannte Kopfteil (40) zur Wasserzufuhr mit einer gemeinsamen Pumpe verbunden sind.

5. Austeilungsaggregat nach Anspruch 1, dadurchgezeichnet dass die genannten ringförmigen Elementen (232-332) des Deckels der Kapsel (230-330) sich querweise so erstrecken, dass sie aneinanderstossen, um ein einzigen Element zum Verschluss der Umfangsöffnung (42) des Teilkopf (40) zu bilden.

6. Austeilungsaggregat nach Anspruch 2, dadurchgezeichnet dass das Gehäuse der für löslichen Getränke geeigneten Kapsel (330) aus zwei mit nach dem Boden sich verminderten Durchmesser zylindrischen Teile besteht, die miteinander verbunden sind und deren Bodes mit einer verdünnten und voreingeschnitten zentralen Zone (336) für den Dirchgang des genannten kegelstrumpfartigen Elementen (50) versehen ist.

7. Austeilungsaggregat nach Anspruch 1, dadurchgezeichnet dass das Gehäuse der Kapseln (230-330) mit einem Flansch (234-334) versehen ist, der mit einem unteren Kragen (235-335) zur Verankerung der Kapsel auf der Obermündung des genannten Umhüllungszylinder.

**Fig. 1**

**Fig. 2**

**Fig. 3**

**Fig. 4**

2

**Fig. 5**

**Fig. 6**

**Fig. 9**

**Fig. 12**

**Fig.8**

**Fig.11**

**Fig.7**

**Fig. 10**